Europäisches Patentamt

European Patent Office

Office européen des brevets

(11) Publication number: **0 372 619**
**A1**

## (12) EUROPEAN PATENT APPLICATION

(21) Application number: **89203000.8**

(22) Date of filing: **27.11.89**

(51) Int. Cl.⁵: **H02G 3/00**

(30) Priority: **05.12.88 BE 8801369**

(43) Date of publication of application:
**13.06.90 Bulletin 90/24**

(84) Designated Contracting States:
**AT BE CH DE ES FR GB IT LI NL**

(71) Applicant: **N.V. BEKAERT S.A.**
**Bekaertstraat 2**
**B-8550 Zwevegem(BE)**

(72) Inventor: **Claeys, Stefaan**
**H. van Brederodestraat 32**
**B-9000 Gent(BE)**
Inventor: **Van der Zwalmen, Mark**
**Aarschotsesteenweg 38**
**B-3010 Leuven(BE)**

(74) Representative: **Ryckeboer, Leo et al**
**N.V. Bekaert S.A. Bekaertstraat 2**
**B-8550 Zwevegem(BE)**

(54) **Cable ladder.**

(57) The modular cable ladder system comprises two
beams (1) and rungs (4) to be inserted transversely
therein for a mutual transverse connection of the
beams, whereby to one side of the body profile (2)
of the beams claw-shaped fitting profiles (3) are
fixed for insertion and clamping of the rung ends, via
a first sliding motion (5) perpendicular to the beams,
followed by a second motion.

FIG.1

# CABLE LADDER

The invention relates to a modular cable ladder system and a cable ladder assembled with this system.

Cable ladders out of metal sheet or plastic profiles are well-known and are employed to support power cables or other piping in their trajectory through buildings. These ladders can be supplied to installers as a modular system. The systems usually comprise two beams and rungs to be transversely inserted into these beams in order to reciprocally connect the beams transversely, as well as adapted connection elements for the successively connecting ends or extremities of the beam sections.

In order to make possible an easy, cheap and still sufficiently strong and immovable assembling of the cable ladders by the installers, it is advisable to avoid bolt-and-nut joints as much as possible. Also, there should be as few as possible week spots in the length of both the beams and the transverse profiles (the rungs), e.g. as a consequence of material recesses, openings or cutouts. This is especially crucial to the beams.

The modular cable ladder system according to the invention meets this requirement by fixing claw-shaped fitting profiles to one side of the body profile of the beams, in order to let the rung-ends grip or clamp into these fitting profiles with a first sliding motion, perpendicular to the beams, followed by a second motion of the rung-ends with regard to the beams. According to the specific execution of the claw-edges and the rung-ends, this second motion can be either a translation (or sliding motion) in the longitudinal direction of the beams, or a rotation of the rungs around their longitudinal axis, or a combination of translation and rotation.

With the aim of facilitating the mounting of the end connection elements for the successive ladder sections, the above-mentioned body profile of the beams will also be equipped with hook-shaped fitting profiles for receiving the connection elements. Said fitting profiles are affixed to the beam side which is opposite to its side where the claw-shaped profiles are fixed on to.

Details will now be described using the example of a particular embodiment of the invention, illustrated by the accompanying figures.

Figure 1 is a perspective view of the cable ladder and its mounting.

Figure 2 shows a mounting whereby the second rung motion is a rotation.

Figure 3 illustrates a T-joint for cable ladders.

Figure 4 concerns a partial sectional view of a connection or transition section in this T-joint.

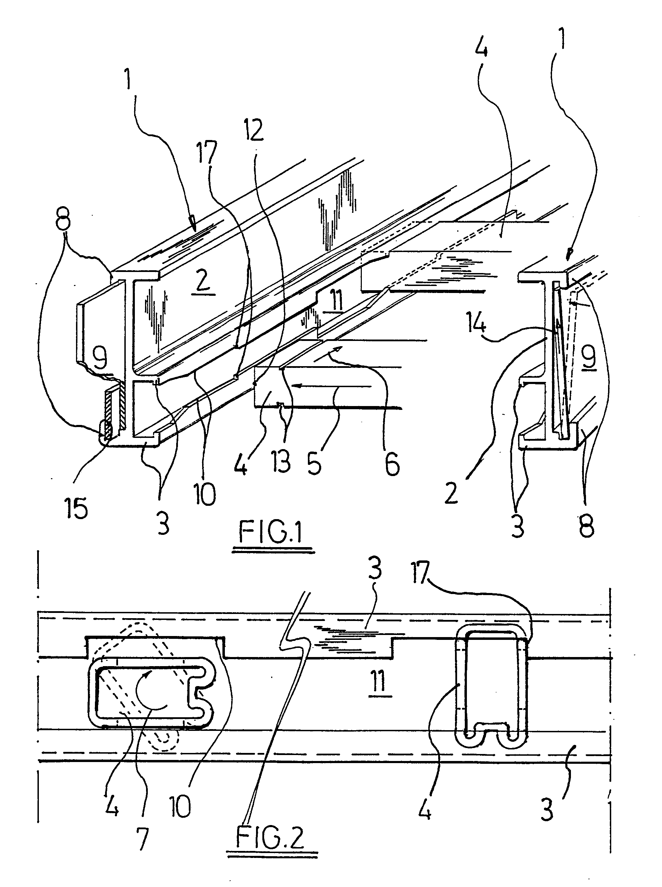

The beams 1 of the cable ladder according to figure 1 include a body profile 2, which is provided with claw-shaped fitting profiles 3 along one side. Along the other side, the profile body 2 is fitted with hook-shaped fitting profiles 8 for receiving the connnection elements 9 (e.g. plates). The pleated rims 10 are equipped with suitable recesses for the transverse insertion of rungs 4 according to de direction indicated by arrow 5. This insertion is done at the level of the wide recess zone 11, so that preferably the transverse end face 12 of the rung is placed into contact with the body profile 2 between the claws 3.

In the rungs 4 suitable slots 13 are provided which, with the insertion of the rung according to the direction indicated by arrow 6 against stop 17, securely enclose the rim section 10. Preferably this rim section will be coated with a layer of glue first, in order to solidly fix the beams and rungs to each other.

The mounters of the cable ladders thus lock the ends 12 of the successive rungs 4 into beam 1. The second beam 1 (in mirror view) is then inserted facing the the other (free) rung ends (according to the direction indicated by arrow 5), at the level of its own wide recess zones (11). Next, the beam is shoved or translated in the direction of its longitudinal axis until every rung makes contact with a stop 17 in the rim sections 10, at the level of its slots 13. It is advisable to fasten the row of rungs into a fitting template.

The shape and structure of the fitting hooks 8, as shown in the right half of figure 1, clearly illustrates the easy assembling possibility for the end connection plates 9. The first step of the insertion is shown in a dotted line, the second step of the insertion in a full line (see also arrow 14).

Against the thus inserted connection plate 9, a clutch plate 15 is also applied behind the hook edge 8, as shown on the left in figure 1. Plates 9 and 15 can also be glued during the positioning in the contact zones with beams 1.

An alternative locking possibility for the rungs is shown in figure 2. Rung 4 is shoved, on its side, into the free space between edges 10 of claws 3 (on the left in figure 2) and is then rotated 90° (according to the direction indicated by arrow 7) against stop 17, which allows the slots 13 to enclose the rim sections 10.

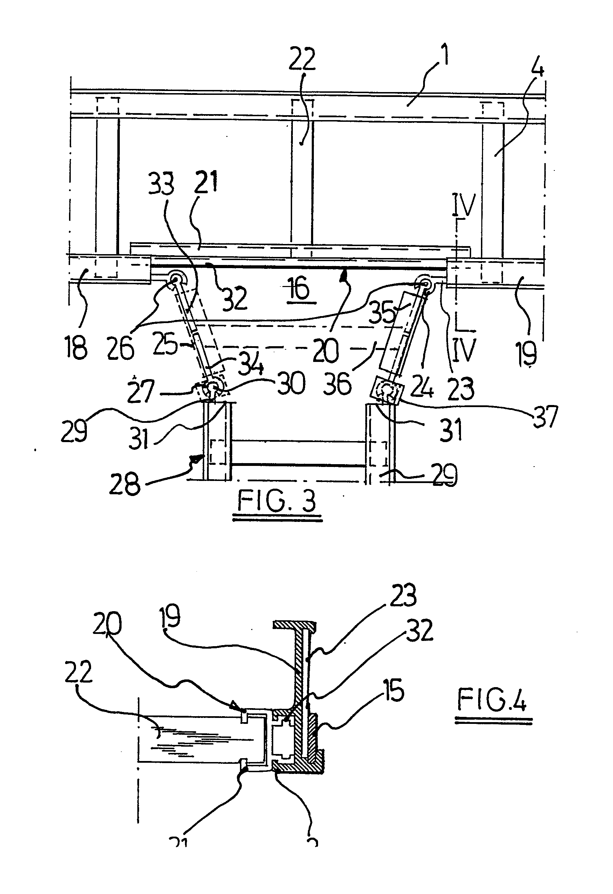

The end connection of those cable ladder sections whose beams do not lie in each others' axis is illustrated in figure 3, by way of example of a T-joint. In the T-shaped coupling zone 16, ladder ends 18, 19 are mutually connected by an insert beam 20. This beam 20 has a claw profile 21 for taking up the somewhat shorter rungs 22, and its back is connected to a profile part 32 which can suitably be shoved into the claws 3 of the beam ends 18 and 19. At the level of these beam ends the connection plates 23 are fixed as described above. However, the plates 23 are provided with a gripping rim 24. This rim makes a hinge-joint with the cilindrical bar end 26 of a bridge section 25. This section 25 includes two connection plate elements 33, 34, which are both clamped securely by a longitudinal segment 35 of a beam profile. If desired, these segments can be mutually interconnected by a fitting mitred transverse profile 36 (dotted line).

The leg 28 of the T is now jointed to the bridge plates 25 by its beam ends 31. This is again done by connection plates 29 with bar ends 30, which are e.g. glued and clasped or clamped into gripping rims 27. In addition, over these hinge joint ends 24, 26 and 27, 30, suitable U-clamps 37 can be shoved, so that cilindrical bar 26, resp. 30 cannot shift axially inside the cavity of the gripping edges 24, resp. 27.

The parts of the cable ladder can be made out of metal, but also out of plastic profiles, whether reinforced or not. Particularly suitable are fibre-reinforced plastic profiles, e.g. manufactured through pultrusion or extrusion. Preferably either the beams 1 and/or the rungs 4 and connection plates 9 will be such reinforced pultruded sections.

## Claims

1. Modular cable ladder system comprising two beams (1) and rungs (4) inserted therein transversely for a mutual transverse connection of the beams, whereby to one side of the body profile (2) of the beams claw-shaped fitting profiles 3 are fixed for gripping and clamping the rung ends, via an insertion with a first sliding motion (5), perpendicular to the beams, followed by a second motion.

2. Cable ladder system according to claim 1 whereby the second motion of the rung ends is a sliding motion (6) in the direction of the longitudinal axis of the beam.

3. Cable ladder system according to claim 1, whereby the second motion is a rotation (7) of the rung ends around the longitudinal axis of the rung.

4. Cable ladder system according to claim 1, whereby the second motion is a combination of a sliding motion according to claim 2 with a rotation according to claim 3.

5. Cable ladder system according to claim 1, whereby on the other side of said body profile (2) hook-shaped fitting profiles (8) are present for the insertion of connection elements (9) for the interconnection of the ends of the successive beam sections.

6. Cable ladder system according to claim 1 wherein the beams (1) are fibre reinforced plastic profiles obtained by pultrusion.

7. Cable ladder system according to claim 6 wherein the rungs (4) are fibre reinforced plastic profiles obtained by pultrusion.

FIG.1

FIG.2

FIG. 3

FIG.4

European Patent
Office

**EUROPEAN SEARCH REPORT**

Application Number

EP 89 20 3000

| DOCUMENTS CONSIDERED TO BE RELEVANT | | | | |
|---|---|---|---|---|
| Category | Citation of document with indication, where appropriate, of relevant passages | | Relevant to claim | CLASSIFICATION OF THE APPLICATION (Int. Cl.5) |
| Y | US-A-3 871 481 (W. BALLEK) * Column 2, line 31 – column 3, line 47; figures 1-4 * --- | | 1,2 | H 02 G 3/00 |
| Y | US-A-3 915 420 (G. NORRIS) * Column 2, lines 13-25; column 4, lines 43-68; figure 1 * --- | | 1,2 | |
| A | US-A-3 798 865 (R. CURTIS) * Column 5, lines 15-58; figure 5 * --- | | 3,4 | |
| A | GB-A-2 038 109 (CABLE SUPPORTS LTD) * Page 1, line 119 – page 2, line 9; figure 5 * --- | | 5 | |
| A | US-A-4 319 724 (S. BRADBURY) * Column 1, lines 34-39 * ----- | | 6,7 | |
| | | | | TECHNICAL FIELDS SEARCHED (Int. Cl.5) E 06 C H 02 G E 04 B |

The present search report has been drawn up for all claims

| Place of search | Date of completion of the search | Examiner |
|---|---|---|
| THE HAGUE | 19-02-1990 | KRIEKOUKIS S. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)